# EUROPEAN PATENT APPLICATION

(11) **EP 1 666 778 A1**
(43) Date of publication of application: **07.06.2006**
(21) Application number: 04816139.2
(22) Date of filing: 15.09.2004
(51) Int. Cl.: F16J 15/32

(54) **SEALING DEVICE FOR RECIPROCATING SHAFT**

(30) Priority: 16.09.2003 JP 2003322769
(71) Applicant: NOK CORPORATION, Tokyo 105-8585 (JP)
(72) Inventor: WATANABE, Masaru, c/o NOK CORPORATION, Fukushima-shi, Fukushima 960110 2 (JP); SHISHIDO, Tsutomu, c/o NOK CORPORATION, Fukushima-shi, Fukushima 96011 02 (JP)
(74) Representative: TBK-Patent
(86) International application number: PCT/JP2004/013411
(87) International publication number: WO 2005/026588

(57) **Abstract**

To solve unstableness of sealing capability and friction characteristic caused by intrusion of external pressure into a portion between an oil seal (1) and a dust seal (2), a sealing device for a reciprocating shaft is provided with an oil seal (1)
where a main lip (12) tightly contacted with an outer peripheral surface of the reciprocating shaft (113) in the state of facing inside in the axial direction is integrally provided in an inner peripheral portion of an inner installation ring (11), and a dust seal (2) where a dust lip (22) tightly contacted with an outer peripheral surface of the shaft (113) in the state of facing outside in the axial direction is integrally provided in an inner peripheral portion of an outer installation ring (21), and the oil seal (1) is provided with an external pressure seal (16) tightly contacted with the outer installation ring (21).

## Description

### Technical Field

The present invention relates to a sealing device for a reciprocating shaft for sealing a reciprocating shaft of a hydraulic shock absorbing apparatus in an air suspension of a vehicle.

### Background Art

As a typical prior art of the sealing device for the reciprocating shaft which is used in the hydraulic shock absorber (a shock absorber) of the vehicle, there are structures described in Japanese Unexamined Patent Publication No. 2000-046092 (Fig. 1) (hereinafter referred to as Patent Document 1) and Japanese Unexamined Patent Publication No. 2001-173797 (Fig. 4) (hereinafter referred to as Patent Document 2) for example.

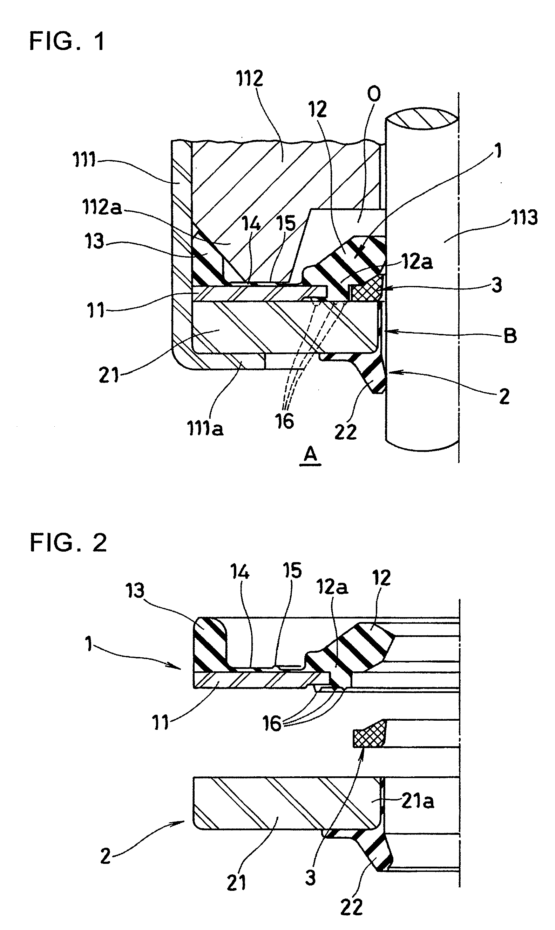

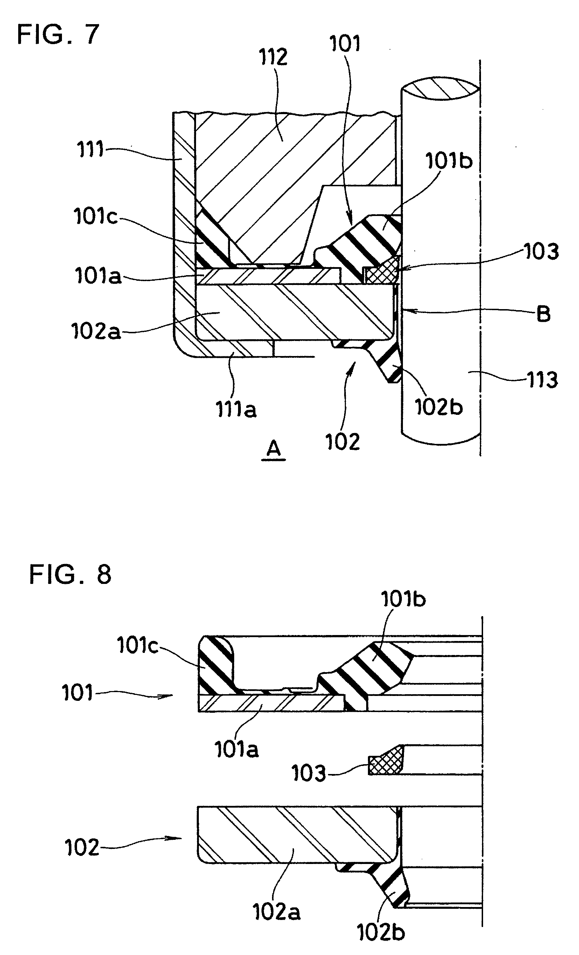

Fig. 7 is a half cross sectional view in an installed state showing the same kind of sealing device for the reciprocating shaft as described in Fig. 1 of the Patent Document 1 together with a part of the hydraulic shock absorber by being cut along a plane passing through the axis, and Fig. 8 is a half cross sectional view in an uninstalled state of the same. In detail, the sealing device is provided with an oil seal 101 for sealing oil liquid in the hydraulic shock absorber, a dust seal 102 preventing intrusion of dust and muddy water from the external, and a backup ring 103 arranged between both the seals 101 and 102, and metal rings 101a and 102a in both the seals 101 and 102 are pinched between a caulked portion 111a in an opening end of an outer tube 111 and a rod guide 112 in an inner side thereof.

The oil seal 101 is structured by integrally forming (vulcanizing and bonding) a main lip 101b to be brought into tight contact with an outer peripheral surface of a piston rod 113 in the state of facing inside in the axial direction (to the side of the rod guide 112), and an outer peripheral lip 101c closely contacting between the outer tube 111 and the rod guide 112, on a metal installation ring 101a with a rubber-like elastic material, and the dust seal 102 is structured by integrally forming (vulcanizing and bonding) a dust lip 102b brought into tight contact with an outer peripheral surface of the piston rod 113 in the state of facing outside in the axial direction, on a metal installation ring 102a with a rubber-like elastic material. Further, the backup ring 103 is structured such as to inhibit deformation of the main lip 101b of the oil seal 101 due to a hydraulic pressure in the hydraulic shock absorber, and is held by an inner peripheral portion of the installation ring 102a in the dust seal 102.

Further, the sealing device for the reciprocating shaft described in the Patent Document 2 is structured by integrally forming (vulcanizing and bonding) a main lip for sealing oil liquid in a hydraulic shock absorber and a dust lip preventing intrusion of dust and muddy water from the external, on an inner peripheral portion of a metal installation ring pinched between an opening end of an outer tube and a rod guide.

### Disclosure of the Invention

### Problem to be Solved by the Invention

However, in the case of an air suspension, for example, since an air spring is constructed in an outer side of an outer tube, there is a case that pressure of air A applied to the dust seal 102 from an outer side becomes high pressure. Therefore, in accordance with the conventional sealing device shown in Figs. 7 and 8 (or the patent document 1), a part of the air A intrudes into a sealed space B between the main lip 101b and the dust lip 102b from a micro gap between the outer tube 111 and the installation ring 102a of the dust seal 102 via a micro gap between the installation ring 102a and the installation ring 101a of the oil seal 101, on the basis of a pressure increase of the air A. Then, since the air pressure within the sealed space B acts so as to reduce fastening force of the main lip 101b and the dust lip 102b applied to the outer peripheral surface of the piston rod 113, there is a risk that sealing capability is reduced and friction with respect to the piston rod 113 is reduced.

Further, since the sealing device for the reciprocating shaft described in the Patent Document 2 is structured such as to be integrally provided with the main lip for sealing the oil liquid within the outer tube and the dust lip preventing intrusion of dust and muddy water from the external on one installation ring, the problem mentioned above is not generated. However, since the lips are formed in both sides in the axial direction of the installation ring, it is necessary to form a groove for circulating the rubber at a time of forming in an inner peripheral portion of the installation ring. Accordingly, since it is hard to design a pressure tight main lip, and it is hard to attach the backup ring, there is a problem in pressure tightness of the main lip.

The present invention is made by taking the problems mentioned above into consideration, and a technical problem of the present invention is to solve unstableness of sealing capability and friction characteristic caused by the external pressure intruding into a portion between an oil seal and a dust seal.

### Means for Solving the Problem

As a means for effectively solving the technical problem mentioned above, in accordance with a first aspect of the present invention, there is provided a sealing device for a reciprocating shaft comprising: an oil seal in which a main lip brought into tight contact with an outer peripheral surface of the reciprocating shaft in the state of facing inside in the axial direction is integrally provided in an inner peripheral portion of an inner installation ring; and a dust seal in which a dust lip brought into tight contact with an outer peripheral surface of the reciprocating shaft in the state of facing outside in the axial direction is integrally provided in an inner peripheral portion of an outer installation ring, wherein one of the oil seal and the dust seal is provided with an external pressure seal brought into tight contact with the installation ring in the other of the oil seal and the dust seal. The external pressure seal is structured such as to shut off intrusion of external pressure into a portion between the main lip and the dust lip from a portion between the inner installation ring and the outer installation ring.

Further, as another means for effectively solving the technical problem mentioned above, in accordance with a second aspect of the present invention, there is provided a sealing device for a reciprocating shaft comprising:
an oil seal in which a main lip brought into tight contact with an outer peripheral surface of the reciprocating shaft in the state of facing inside in the axial direction is integrally provided in an inner peripheral portion of an inner installation ring; and a dust seal in which a dust lip brought into tight contact with an outer peripheral surface of the reciprocating shaft in the state of facing outside in the axial direction is integrally provided in an inner peripheral portion of an outer installation ring, wherein tubular fitting surfaces closely fitted to each other are formed in the inner installation ring and the outer installation ring. Thus, the oil seal and the dust lip are integrally formed by closely fitting the tubular fitting surfaces, and it is possible to shut off intrusion of external pressure into a portion between the main lip and the dust lip.

### Effect of the Invention

In accordance with the sealing device for the reciprocating shaft on the basis of the invention stated in the first aspect, since it is possible to shut off the intrusion of the external pressure into the portion between the main lip of the oil seal and the dust lip of the dust seal from the portion between the inner installation ring of the oil seal and the outer installation ring of the dust seal, by means of the external pressure seal, even under a condition by which the external pressure becomes high pressure, it is possible to prevent the sealed space between the main lip and the dust lip from being pressurized so as to maintain an improved sealing capability of the main lip, and it is possible to secure a desired friction with respect to a reciprocation in the axial direction of the reciprocating shaft.

In accordance with the sealing device for the reciprocating shaft on the basis of the invention stated in the second aspect, since it is possible to shut off the intrusion of the external pressure into the portion between the main lip of the oil seal and the dust lip of the dust seal from the portion between the inner installation ring of the oil seal and the outer installation ring of the dust seal, by means of the closely fitting portions of the tubular fitting surface formed in the inner installation ring and the tubular fitting surface formed in the outer installation ring, even under a condition by which the external pressure becomes high pressure, it is possible to achieve the same effects as those of the first aspect. Further, since the oil seal and the dust lip can be integrally formed before assembling in the equipment, it is possible to easily handle.

### Brief Description of the Drawings

Fig. 1 is a half cross sectional view in an installed state, showing a first embodiment of a sealing device for a reciprocating shaft in accordance with the present invention together with a part of a hydraulic shock absorber, by being cut along a plane passing through the axis;
Fig. 2 is a half cross sectional view in an uninstalled state, showing the sealing device for the reciprocating shaft in accordance with the embodiment in Fig. 1, by being cut along the plane passing through the axis;
Fig. 3 is a half cross sectional view in an installed state, showing a second embodiment of a sealing device for a reciprocating shaft in accordance with the present invention together with a part of a hydraulic shock absorber, by being cut along a plane passing through the axis;
Fig. 4 is a half cross sectional view in an uninstalled state, showing the sealing device for the reciprocating shaft in accordance with the embodiment in Fig. 3, by being cut along the plane passing through the axis;
Fig. 5 is a half cross sectional view in an installed state, showing a third embodiment of a sealing device for a reciprocating shaft in accordance with the present invention together with a part of a hydraulic shock absorber, by being cut along a plane passing through the axis;
Fig. 6 is a half cross sectional view in an uninstalled state, showing the sealing device for the reciprocating shaft in accordance with the embodiment in Fig. 5, by being cut along the plane passing through the axis;
Fig. 7 is a half cross sectional view in an installed state, showing the same kind of conventional sealing device for the reciprocating shaft as described in Fig. 1 of the Patent Document 1 together with a part of a hydraulic shock absorber by being cut along a plane passing through the axis; and
Fig. 8 is a half cross sectional view in an uninstalled state, showing the sealing device for the reciprocating shaft in Fig. 7, by being cut along the plane passing through the axis.

### Best Mode for Carrying Out the Invention

A description will be in detail given below of preferable embodiments in accordance with the present invention with reference to the accompanying drawings.

First, in Fig. 1, similarly to the previously explained Fig. 7, reference numeral 111 denotes an outer tube of a hydraulic shock absorber in a suspension apparatus of a vehicle, reference numeral 112 denotes a rod guide which is inserted to an inner periphery near an open end of the outer tube 111 and is attached to an open end of an inner tube (not shown), and reference numeral 113 denotes a piston rod passing through an inner periphery of the rod guide 112. The piston rod 113 corresponds to the reciprocating shaft described in the first aspect.

The sealing device for the reciprocating shaft in accordance with the present invention is provided with an oil seal 1 fixed to portion between a caulked portion 111a in an open end of the outer tube 111 and the rod guide 112 in an inner side thereof, and sealing oil liquid O in a hydraulic shock absorber, a dust seal 2 preventing intrusion of dust, muddy water or the like from the external, and a backup ring 3.

In detail, the oil seal 1 has an inner installation ring 11 made of a metal and formed in a disc shape, a min lip 12 integrally provided in an inner peripheral portion thereof, and an outer peripheral lip 13 integrally provided in an outer peripheral portion of the inner installation ring 11, as shown in Fig. 2. The main lip 12 and the outer peripheral lip 13 are both facing inside in the axial direction, that is, to the side of the rod guide 112, and an intermediate projection 15 is formed in an elastic film portion 14 continuously formed between both the lips 12 and 13 and integrally attached to one surface of the inner installation ring 11. Further, a plurality of external pressure seals 16 are concentrically formed in a back surface facing outside in the axial direction of a base portion 12a in the main lip 12. The external pressure seal 16 protrudes outward beyond the back surface of the inner installation ring 11 in an uninstalled state shown in Fig. 2.

The main lip 12, the outer peripheral lip 13, the elastic film portion 14, the intermediate projection 15 and the back surface lip 16 are formed by a continuous rubber-like elastic material. In detail, they are vulcanized and bonded to the inner installation ring 11 at the same time of vulcanizing formation by previously setting the inner installation ring 11, to which a vulcanizing adhesive agent is applied, within a predetermined metal mold, then filling an unvulcanized rubber material within an annular cavity defined between the inner installation ring 11 and a metal mold inner surface, and heating and pressurizing the unvulcanized rubber material.

On the other hand, the dust seal 2 has an outer installation ring 21 made of a metal and formed in a disc shape, and a dust lip 22 integrally provided in an inner peripheral portion thereof. The dust lip 22 is formed by a rubber-like elastic material. In detail, the dust lip 22 is vulcanized and bonded to the outer installation ring 21 at the same time of vulcanizing formation by previously setting the outer installation ring 21 to which a vulcanizing adhesive agent is applied, within a predetermined metal mold, then filling an unvulcanized rubber material within an annular cavity defined between the outer installation ring 21 and a metal mold inner surface, and heating and pressurizing the unvulcanized rubber material, in the same manner as the oil seal 1.

The backup ring 3 is formed with a synthetic resin material which has a suitable rigidity, is excellent in an abrasion resistance and has a significantly low friction coefficient, for example, PTFE or the like, and is interposed between the main lip 12 in the oil seal 1 and the inner peripheral portion 21a of the outer installation ring 21 in the dust seal 2.

In the installed state shown in Fig. 1, the oil seal 1 is arranged inside in the axial direction, and the dust seal 2 is arranged outside in the axial direction. The inner installation ring 11 in the oil seal 1 and the outer installation ring 21 in the dust seal 2 are pinched between the caulked portion 111a of the outer tube 111 and an annular projection portion 112a in the rod guide 112 in the state of being lapped over each other. Further, the main lip 12 in the oil seal 1 is positioned in an inner periphery of the annular projection portion 112a, and a leading end inner peripheral portion is brought into tight contact with an outer peripheral surface of the piston rod 113 so as to be slidable, thereby inhibiting leakage of oil liquid O in an inner portion reaching an inner peripheral space of the annular projection portion 112a in the rod guide 112 to the external from a shaft periphery. Further, a leading end inner peripheral portion of the dust lip 22 in the dust seal 2 is brought into tight contact with an outer peripheral surface of the piston rod 113 so as to be slidable, thereby preventing intrusion of dust, muddy water or the like from the external. Further, the backup ring 3 is structured such as to prevent excessive deformation of the main lip 12 due to a hydraulic pressure, by supporting the back surface of the main lip 12 in the oil seal 1.

On the other hand, the outer peripheral lip 13 in the oil seal 1 is brought into tight contact in a suitable compressed state with an inner peripheral surface of the outer tube 111 and a tapered outer peripheral surface of the annular projection portion 112a in the rod guide 112, thereby inhibiting leakage of the oil liquid O from an outer periphery of the rod guide 112. Further, the elastic film portion 14 and the intermediate projection 15 provided in the inner installation ring 11 in the oil seal 1 absorb an error of a caulking force applied to the inner installation ring 11 and the outer installation ring 21 by the caulked portion 111a of the outer tube 111 and the annular projection portion 112a in the rod guide 112, and has a sealing function with respect to the oil liquid O.

In this case, in the air suspension, an air chamber (not shown) is provided in an outer portion of the hydraulic shock absorber, and an air A pressurized by an air compressor is supplied into the air chamber, whereby an air spring is constructed. Further, a pressure of the pressurized air A within the air chamber is applied to the dust seal 2, however, since the pressure of the pressurized air A is applied as a tight contact force with respect to the outer peripheral surface of the piston rod 113 to the dust lip 22 of the dust seal 2, it is possible to effectively prevent intrusion of the pressurized air A from a portion between the dust lip 22 and the piston rod 113.

Further, the pressurized air A within the air chamber intrudes into a micro gap between the outer installation ring 21 and the inner installation ring 11 of the oil seal 1 from a portion between the caulked portion 111a of the outer tube 111 and the outer peripheral portion of the outer installation ring 21 of the dust seal 2. However, since a plurality of external pressure seals 16 formed in the back surface of the base portion 12a in the main lip 12 are brought into tight contact with the outer installation ring 21 in the dust seal 2, in the state of being suitably compressed, by a pinching pressure by the caulked portion 111a of the outer tube 111 and the annular projection portion 112a in the rod guide 112, the pressurized air A can not pass through the micro gap between the inner installation ring 11 and the outer installation ring 21 to the inner peripheral side.

Accordingly, it is possible to prevent reduction of the fastening force of the main lip 12 and the dust lip 22 due to a reason that the pressurized air A intrudes into the sealed space B between the main lip 12 and the dust lip 22, and pressure is accumulated in the sealed space B. As a result, it is possible to maintain an improved sealing capability of the main lip 12 with respect to the oil liquid O reaching the inner peripheral space of the annular projection portion 112a in the rod guide 112, and it is possible to secure a desired friction with respect to a reciprocating motion in the axial direction of the piston rod 113.

Further, as is different from the case that the main lip 12 and the dust lip 22 which have inverse directions are integrally formed on a single metal ring, it is not necessary to form a notch groove for circulating the rubber at a time of forming, in the inner peripheral portion of the inner installation ring 11 in the oil seal 1 and the inner peripheral portion of the outer installation ring 21 in the dust seal 2, and thus it is possible to make the main lip 12 (and the dust lip 22) excellent in the pressure tightness.

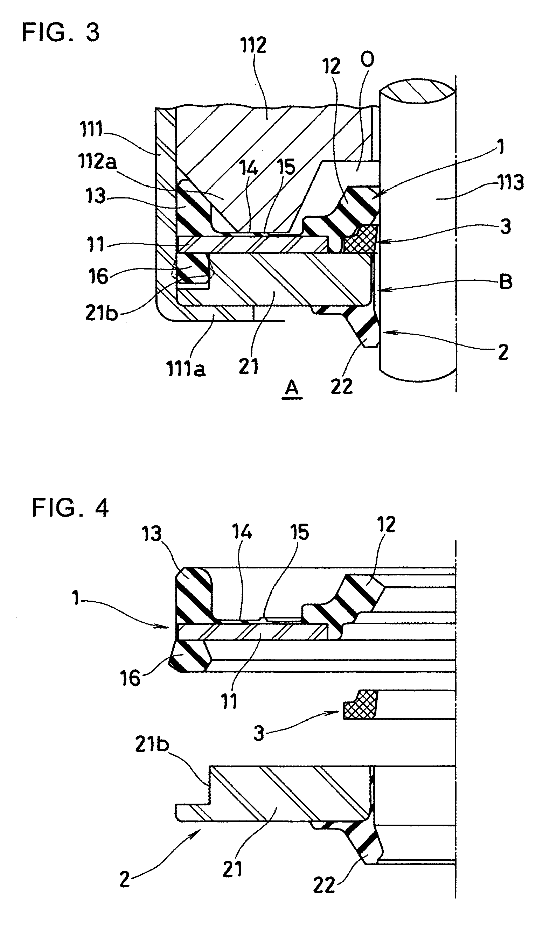

The second embodiment shown in Figs. 3 and 4 is different from the first embodiment shown in Figs. 1 and 2 mentioned above in a point that the external pressure seal 16 is provided in the outer peripheral portion of the inner installation ring 11 in the oil seal 1 in an inverse direction to the outer peripheral lip 13, and the outer peripheral lip 13 is brought into tight contact with an outer peripheral surface of an annular ring 21b formed in the outer peripheral portion of the outer installation ring 21 in the dust seal 2 and an inner peripheral surface of the outer tube 111 by a suitable collapse margin. Since the other portions are the same as those in Figs. 1 and 2 basically, the other portions are shown by giving the same reference numerals thereto and an overlapping description will be omitted.

In the structure mentioned above, the pressurized air A within the air chamber (not shown) provided in the external portion of the hydraulic shock absorber is going to intrude into the micro gap between the outer installation ring 21 and the inner installation ring 11 of the oil seal 1 from the portion between the caulked portion 111a of the outer tube 111 and the outer peripheral portion of the outer installation ring 21 of the dust seal 2. However, since the external pressure seals 16 provided in the outer peripheral portion of the inner installation ring 11 interpose between the outer peripheral surface of the annular groove 21b formed in the outer installation ring 21 of the dust seal 2 and the inner peripheral surface of the outer tube 111 in a compressed state, the pressurized air A can not intrude into the portion between the inner installation ring 11 and the outer installation ring 21. Accordingly, similarly to the first embodiment, it is possible to prevent pressure accumulation due to intrusion of the pressurized air A in the sealed space B between the main lip 12 and the dust lip 22, it is possible to maintain an improved sealing capability of the main lip 12 with respect to the oil liquid O, and it is possible to secure a desired friction with respect to a reciprocating motion in the axial direction of the piston rod 113.

In the first and second embodiments mentioned above, the external pressure seal 16 is provided in the oil seal 1 side, however, even in the case that the external pressure seal 16 is provided in the dust seal 2 side and is brought into tight contact with the inner installation ring 11 in the oil seal 1, it is possible to achieve the same effect.

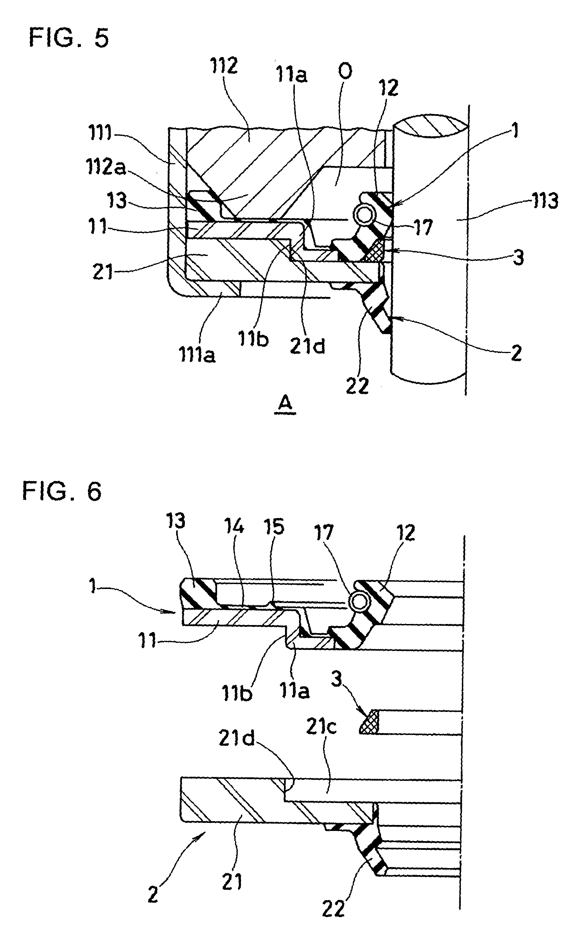

The third embodiment in Figs. 5 and 6 is different from the first embodiment shown in Figs. 1 and 2 described previously in a point that an annular step portion 11a continuously provided in the circumferential direction is formed in the inner installation ring 11 in the oil seal 1, and a circular recess portion 21c corresponding to the annular step portion 11a is formed in the inner peripheral portion of the outer installation ring 21 in the dust seal 2, as shown in Fig. 6. In detail, the annular step portion 11a is formed such that an inner peripheral side protrudes to an opposite side to the rod guide 112, and the circular recess portion 21c is formed in a surface close to the rod guide 112 (close to the oil seal 1) in the outer installation ring 21. An axial height of the annular step portion 11a is approximately equal to an axial depth of the circular recess portion 21c, and an outer diameter of the annular step portion 11a is slightly larger than an inner diameter of the circular recess portion 21c.

In other words, the annular step portion 11a formed in the inner installation ring 11 of the oil seal 1 is pressure-inserted to the circular recess portion 21c formed in the outer installation ring 21 of the dust seal 2, whereby a tubular outer peripheral surface 11b in the annular step portion 11a and an inward tubular surface 21d in the circular recess portion 21c are tightly fitted to each other by a suitable fastening margin, and whereby the oil seal 1 (the inner installation ring 11) and the dust seal 2 (the outer installation ring 21) can be integrally formed with each other. In this case, the tubular outer peripheral surface 11b and the inward tubular surface 21d correspond to the tubular fitting surface described in the second aspect, and are smoothly finished so as to be brought into tight contact with each other with no gap.

Since the other portions are basically the same as those in Figs. 1 and 2, the other portions are shown by attaching the same reference numerals, and a description thereof will be omitted. In this case, a garter spring 17 for compensating the fastening force is installed to the main lip 12 in the oil seal 1.

In the structure mentioned above, the pressurized air A within the air chamber (not shown) provided in the external portion of the hydraulic shock absorber is going to intrude into the micro gap between the outer installation ring 21 and the inner installation ring 11 of the oil seal 1 from the portion between the caulked portion 111a of the outer tube 111 and the outer peripheral portion of the outer installation ring 21 of the dust seal 2. However, since the tubular outer peripheral surface 11b in the inner installation ring 11 and the inward tubular surface 21d in the outer installation ring 21 are in the state of being tightly attached to each other with a fastening margin, the pressurized air A can not pass to the inner peripheral side from this portion. Accordingly, similarly to the first embodiment, it is possible to prevent pressure accumulation due to intrusion of the pressurized air A in the sealed space B between the main lip 12 and the dust lip 22, it is possible to maintain an improved sealing capability of the main lip 12 with respect to the oil liquid O, and it is possible to secure a desired friction with respect to a reciprocating motion in the axial direction of the piston rod 113.

Further, since the oil seal 1 and the dust seal 2 are manufactured as the independent parts, it is possible to make the main lip 12 (and the dust lip 22) excellent in the pressure tightness, similarly to the previous first embodiment. Further, it is possible to integrally form the oil seal 1 and the dust seal 2 with each other in the state in which the backup ring 3 is interposed between the main lip 12 and the outer installation ring 21, by pressure inserting the annular step portion 11a formed in the inner installation ring 11 of the oil seal 1 to the circular recess portion 21c formed in the outer installation ring 21 of the dust seal 2 from the separated state shown in Fig. 6. Further, since this integrally forming is executed before being assembled as shown in Fig. 5, it is possible to handle the oil seal 1, the dust seal 2 and the backup ring 3 as a single sealing device in which they are integrally formed with each other.

In this case, as is inverse to the embodiment shown in Fig. 5, the structure may be made such that the inner installation ring 11 and the outer installation ring 21 are tightly fitted to each other by the tubular surfaces by forming a circular convex portion protruding to the rod guide 112 side in the inner peripheral portion of the outer installation ring 21 in the dust seal 2, and pressure inserting and fitting the circular convex portion to the inner periphery of the annular step portion 11a formed in a shape protruding to the rod guide 112 side in the inner installation ring 11 in the oil seal 1.

### Industrial Applicability

The present invention can be preferably applied to a sealing device for a reciprocating shaft for sealing the reciprocating shaft of a hydraulic shock absorbing apparatus or the like in an air suspension of a vehicle.

## Claims

1. A sealing device for a reciprocating shaft comprising:
an oil seal (1) in which a main lip (12) brought into tight contact with an outer peripheral surface of the reciprocating shaft (113) in the state of facing inside in the axial direction is integrally provided in an inner peripheral portion of an inner installation ring (11); and
a dust seal (2) in which a dust lip (22) brought into tight contact with an outer peripheral surface of said reciprocating shaft (113) in the state of facing outside in the axial direction is integrally provided in an inner peripheral portion of an outer installation ring (21),
wherein one of said oil seal (1) and the dust seal (2) is provided with an external pressure seal (16) brought into tight contact with the installation ring in the other of said oil seal (1) and the dust seal (2).

2. A sealing device for a reciprocating shaft comprising:
an oil seal (1) in which a main lip (12) brought into tight contact with an outer peripheral surface of the reciprocating shaft (113) in the state of facing inside in the axial direction is integrally provided in an inner peripheral portion of an inner installation ring; and
a dust seal (2) in which a dust lip (22) brought into tight contact with an outer peripheral surface of said reciprocating shaft (113) in the state of facing outside in the axial direction is integrally provided in an inner peripheral portion of an outer installation ring (21),
wherein tubular fitting surfaces (11b, 21d) closely fitted to each other are formed in said inner installation ring (11) and said outer installation ring (21).

## Amended claims

### Amended claims under Art. 19.1 PCT

**1.** A sealing device for a reciprocating shaft comprising:
an oil seal (1) in which a main lip (12) brought into tight contact with an outer peripheral surface of the reciprocating shaft (113) in the state of facing inside in the axial direction is integrally provided in an inner peripheral portion of an inner installation ring (11); and
a dust seal (2) in which a dust lip (22) brought into tight contact with an outer peripheral surface of said reciprocating shaft (113) in the state of facing outside in the axial direction is integrally provided in an inner peripheral portion of an outer installation ring (21),
wherein one of said oil seal (1) and the dust seal (2) is provided with an external pressure seal (16) brought into tight contact with the installation ring in the other of said oil seal (1) and the dust seal (2).

**2.** A sealing device for a reciprocating shaft comprising:
an oil seal (1) in which a main lip (12) brought into tight contact with an outer peripheral surface of the reciprocating shaft (113) in the state of facing inside in the axial direction is integrally provided in an inner peripheral portion of an inner installation ring; and
dust seal (2) in which a dust lip (22) brought into tight contact with an outer peripheral surface of said reciprocating shaft (113) in the state of facing outside in the axial direction is integrally provided in an inner peripheral portion of an outer installation ring (21),
wherein tubular fitting surfaces (11b, 21d) closely fitted to each other are formed in said inner installation ring (11) and said outer installation ring (21) .

**3.** (Added) A sealing device for a reciprocating shaft as claimed in claim 1 or 2, wherein a backup ring is interposed between the main lip (12) in the oil seal (1) and the inner peripheral portion (21a) of the outer installation ring (21) in the dust seal (2).
